# EUROPEAN PATENT APPLICATION

(11) **EP 4 682 740 A1**
(43) Date of publication of application: **21.01.2026**
(21) Application number: 24315347.5
(22) Date of filing: 18.07.2024
(51) Int. Cl.: G06F 16/25

(54) **METHOD AND APPARATUS FOR DIFFERENTIAL PROCESSING OF DATA RECORD COMPONENTS**

(71) Applicant: Amadeus S.A.S., 06410 Biot (FR)
(72) Inventor: BISEGNA, Tony, 06220 Vallauris (FR); AZEMARD, Laurent, 06200 Nice (FR); JEBARI, Reda, 06270 Villeneuve-Loubet (FR); ROSSO, Louis, 06950 Falicon (FR); NOLIN, Alois, 06130 Grasse (FR)
(74) Representative: Samson & Partner Patentanwälte mbB

(57) **Abstract**

A method includes: storing a set of records including: (i) a first record having a first identifier, and (ii) a second record having a second identifier and a link to the first record, the second identifier configured, via the link to the first record, to identify a first mixed record generated from the first and second records; receiving a request containing the second identifier; generating a shell record including a third identifier and a further link to the first record, the third identifier configured, via the further link to the first record, to identify a second mixed record generated from the shell record and the first record; and storing the shell record.

## Description

### FIELD

The specification relates generally to handling data records, and specifically to a method and apparatus for differential processing of data record components.

### BACKGROUND

Certain classes of products, including for example travel-related goods and services, may include a number of different types of products. For example, the general class of travel-related goods and services includes products such as flights, hotel reservations, automobile rentals, and the like. Multiple products within a class may be purchased in association with each other by a given user, such as one or more flights and a hotel reservation for a given trip.

The individual products, however, may be provided by discrete supplier entities (e.g., airlines, hotels and the like) using distinct data-exchange infrastructure to store and communicate data defining the above-mentioned products. In other words, products may be represented by different record types, with each record type being stored and manipulated using a particular record identifier.

Retrieving and modifying data defining the products may involve communicating with the supplier entities (e.g., by a user or an entity acting on behalf of the user, such as a travel agency) using various distinct communication protocols, message content formats, update mechanisms, and the like. Certain systems may provide intermediation services that permit a client system (e.g., operated by a travel agency in the context of travel-related goods and services) to view and manipulate records of different types as though the content therein is contained in a single record. Such services, however, may complicate or prevent manipulations affecting only a portion of the records.

### SUMMARY

Examples disclosed herein include a method, comprising: storing a set of records including: (i) a first record having a first identifier, and (ii) a second record having a second identifier and a link to the first record, the second identifier configured, via the link to the first record, to identify a first mixed record generated from the first and second records; receiving a request containing the second identifier; generating a shell record including a third identifier and a further link to the first record, the third identifier configured, via the further link to the first record, to identify a second mixed record generated from the shell record and the first record; and storing the shell record.

In some examples, the first record includes first content; the second record includes second content; and the shell record includes no content.

In some examples, the method further includes: prior to generating the shell record, determining that the request contains a command to split the first mixed record.

In some examples, determining that the request includes a command to split the first mixed record includes: comparing the request to a predetermined list of commands.

In some examples, the method further includes: in response to generating the shell record, executing the command.

In some examples the first record has a first format, and the second record and the shell record each have a second format distinct from the first format.

In some examples, the request is received from a client subsystem, and the method further includes: sending a notification to the client subsystem indicating that the first mixed record has been split.

Further examples disclosed herein include a non-transitory computer-readable medium storing instructions executable by a processor of a computing device to perform the above methods.

Further examples disclosed herein include a computing device, comprising: a memory storing a set of records including: (i) a first record having a first identifier, and (ii) a second record having a second identifier and a link to the first record, the second identifier configured, via the link to the first record, to identify a first mixed record generated from the first and second records; and a processor configured to: receive a request containing the second identifier; generate a shell record including a third identifier and a further link to the first record, the third identifier configured, via the further link to the first record, to identify a second mixed record generated from the shell record and the first record; and store the shell record in the memory.

In some examples, the first record includes first content; the second record includes second content; and the shell record includes no content.

In some examples, the processor is further configured to: prior to generating the shell record, determine that the request contains a command to split the first mixed record.

In some examples the processor is configured to determine that the request includes a command to split the first mixed record by: comparing the request to a predetermined list of commands.

In some examples, the processor is further configured to: in response to generating the shell record, execute the command.

In some examples, the first record has a first format, and the second record and the shell record each have a second format distinct from the first format.

In some examples, the request is received from a client subsystem; and the processor is further configured to: send a notification to the client subsystem indicating that the first mixed record has been split.

### BRIEF DESCRIPTIONS OF THE DRAWINGS

Embodiments are described with reference to the following figures.
FIG. 1 is a diagram illustrating a system for differential processing of data record components.
FIG. 2 is a diagram illustrating certain internal components of the aggregator server of FIG. 1.
FIG. 3 is a diagram illustrating the storage of example data records and reconstruction of a mixed data record.
FIG. 4 is a flowchart of a method of processing data records in the system of FIG. 1.
FIG. 5 is a diagram illustrating an example set of data records.
FIG. 6A is a diagram illustrating the results of an example performance of blocks 415 and 420 of the method of FIG. 4.
FIG. 7 is a diagram illustrating an example generation of split mixed data records via a performance of the method of FIG. 4.

### DETAILED DESCRIPTION

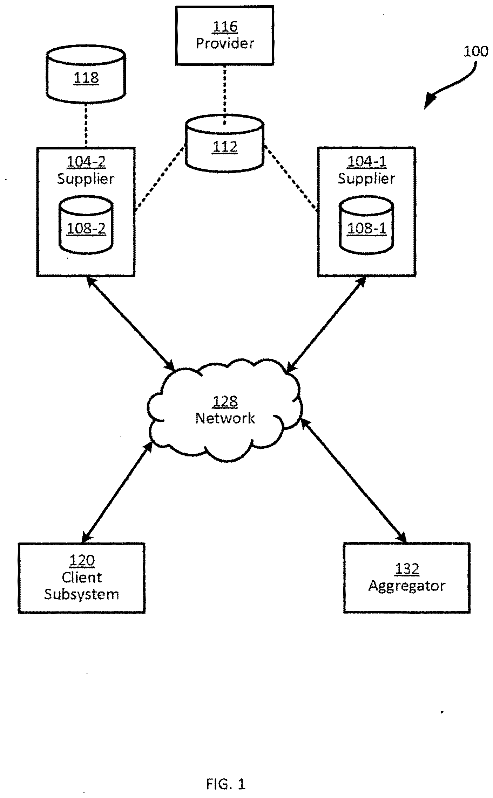

FIG. 1 depicts a system 100 for differential processing of data record components. Data records, which may also be referred to as data objects herein, can define products such as travel-related goods and services such as flights, hotel reservations, vehicle rentals, and related services (e.g., baggage check services for flights, lounge access at airports, WiFi access on flights or at hotels, and so on). As will be apparent to those skilled in the art, however, the systems and methods discussed below can also be applied to various other types of data objects (that is, data objects defining a wide variety of other forms of products).

Delivery of the above-mentioned products to customers can be implemented by a provider entity, such as an airline for flights, a rental agency for vehicle rentals, and the like. Prior to delivery of the products to customers (e.g., passengers on a flight), the products are purchased or otherwise secured on behalf of the customers, via a series of data exchanges. To that end, the system 100 includes one or more supplier subsystems, of which two examples 104-1 and 104-2 are shown (collectively referred to as supplier subsystems 104, or simply suppliers 104). Data objects maintained by or on behalf of each supplier defines the products available for purchase, or already purchased, from the supplier. The above-mentioned data objects are also referred to as a supplier data objects or supplier records in the discussion below.

The supplier subsystems 104 can be, but are not required to be, operated by the above-mentioned providers. For example, the supplier 104-1 is operated in the present example by an airline (that is, a provider entity). For instance, the supplier 104-1 may exchange data with other components of the system 100 to enable the provision of products according to the eXtensible Markup Language (XML)-based New Distribution Capability (NDC) standard. Such products may be referred to as being obtained via the NDC distribution channel. The supplier 104-1, in this example, maintains a repository 108-1 defining product inventory, such as flights operated by the airline that are available for booking, or that have been booked.

Other supplier subsystems 104 can be operated by third parties not directly responsible for the provision of the products to customers. For example, the supplier 104-2, in the present example, is a Global Distribution System (GDS) operated by a third party distinct from the provider entities (e.g., the airlines, in this example). Products obtained via the supplier 104-2 can be referred to as being obtained via a GDS distribution channel. The supplier 104-2 maintains a repository 108-2 defining product inventory and/or bookings. The supplier 104-2 can retrieve data for the repository 108-2 from various other components of the system 100, including, for example, a Central Reservation System (CRS) 112 containing inventory data for a further provider 116 (e.g. another airline), and a pricing or tariff repository 118. As indicated by the dashed lines in FIG. 1, the CRS 112 can also contain inventory data retrieved from the supplier 104-1 itself. That is, the provider operating the supplier subsystem 104-1 can arrange for the provision of products through more than one distribution channel.

The system 100 can include a wide variety of additional supplier subsystems 104, including additional GDS subsystems, and/or additional provider-operated subsystems. For example, the system 100 can include a further subsystem 104 (not shown) configured to store and distribute data records corresponding to low-cost carrier airlines. Such a subsystem 104 can operate as a GDS subsystem, and/or according to another distribution channel (e.g., Extended Air Choice or EAC).

The system 100 also includes a client subsystem 120, for example operated by a travel agency, individual customer, or the like. The system 100 can include more than one client subsystem 120 in other examples. The client subsystem 120 can be configured to interact with the supplier subsystems 104 via a network 128, including any suitable combination of local- and wide-area networks. Interactions between the client subsystem 120 and the supplier subsystems 104 can lead to the generation of data records, such as passenger name records (PNRs). A PNR can contain data defining one or more products booked for one or more travelers (e.g., individual persons).

The client subsystem 120 may interact with a number of different supplier subsystems 104 on behalf of any given customer. Each supplier subsystem 104 may store and exchange supplier data objects in distinct formats, e.g., according to the distribution channel implemented by the supplier subsystem 104. The supplier subsystems 104 may also, for example based on which distribution channel(s) they implement, provide different update mechanisms for making bookings and/or subsequently modifying bookings. A travel itinerary that includes a set of travel-related products that are associated with the same traveler or set of travelers and with the same trip to be taken by those travelers may therefore be represented by multiple data records, which may be cross-compatible with one another. In other words, part of the itinerary may be defined in a GDS-based data record from the supplier subsystem 104-2, and another part of the itinerary may be defined in an NDC-based data from the supplier subsystem 104-1.

The heterogeneous nature of the records generated by the suppliers 104, and the corresponding heterogeneous update mechanisms involved in modifying or otherwise manipulating those data records, may impose a substantial technical burden on the client subsystem 120 (and any other client subsystems in the system 100). For example, the client subsystem 120 may be required to implement communication mechanisms to interact with each supplier subsystem 104. Even when such communication mechanisms are implemented at the client subsystem 120, viewing an itinerary defined by multiple records, such as an NDC record and a GDS record as noted above, may be obstructed at the client subsystem 120 by the need to switch between retrieving and displaying the relevant records separately from one another, such that only a portion of the itinerary is viewable at a time. Rendering of information for the itinerary at the client subsystem 120 may therefore be inconsistent, and the available update mechanisms may vary for different portions of an itinerary. The above-noted inconsistencies between different portions of an itinerary may cause erroneous or malformed purchase or other update requests to be transmitted to the supplier subsystems 104 by the client subsystem 120.

The system 100 also includes an intermediate subsystem, referred to as an aggregator server 132 or aggregator 132, in communication with the client subsystem 120 and the suppliers 104 via the network 128. The aggregator 132 can retrieve data corresponding to an itinerary from one or more suppliers 104, and present that data to the client subsystem 120 as a single record. For example, the aggregator 132 can retrieve distinct data records from the suppliers 104-1 and 104-2, representing different portions of an itinerary, and present a combined data record to the client subsystem 120. The client subsystem 120 may therefore be relieved of the need to implement multiple communications protocols, data formats, and the like. The aggregator 132 can also, in some systems, implement distinct update mechanisms for each supplier 104, enabling the client subsystem 120 to request modifications to the itinerary. The aggregator 132 can translate the requested modifications and relay them to the relevant suppliers 104, substantially transparently to the client subsystem 120.

The presentation of combined data records (which may also be referred to as mixed data records, or aggregated data records) by the aggregator 132 can be achieved by establishing links between the individual data records (e.g., as provided by the suppliers 104) at the aggregator 132, and providing the client subsystem 120 with a record identifier corresponding to a single one of those records. The aggregator 132 can use the links to reconstruct the mixed itinerary for presentation to the client subsystem 120. In other words, the client subsystem 120 can interact with the aggregator 132 without awareness of the individual records contributing to the itinerary. This approach, however, can obstruct certain modifications or other operations to the itinerary. For example, some update mechanisms are available for one record type (e.g., GDS), but not another (e.g., NDC, or vice versa). Those update mechanisms may be unavailable for mixed itineraries, because they cannot be applied across the mixed itinerary as a whole. More generally, the use of a single record identifier by the client subsystem 120 for a mixed itinerary may prevent the client subsystem 120 from manipulating portions of the mixed itinerary, e.g., to modify those portions or extract them to form a separate, related itinerary.

The aggregator 132 is therefore also configured to implement record handling functionality that enables a mixed itinerary (e.g., composed of two or more data records of different types) to be split into distinct itineraries, while maintaining an association between those itineraries.

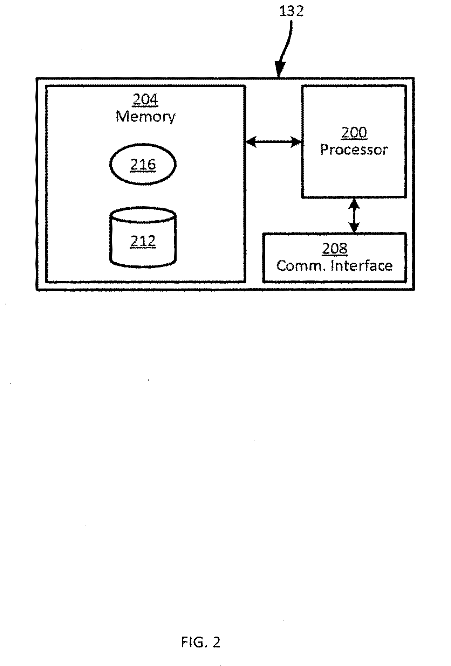

Turning to FIG. 2, before discussing the functionality of the system 100 in greater detail, certain components of the aggregator 132 will be discussed in greater detail. As shown in FIG. 2, the aggregator 132 includes at least one processor 200, such as a central processing unit (CPU) or the like. The processor 200 is interconnected with a memory 204, implemented as a suitable non-transitory computer-readable medium (e.g. a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 200 and the memory 204 are generally comprised of one or more integrated circuits (ICs).

The processor 200 is also interconnected with a communication interface 208, which enables the aggregator 132 to communicate with the other computing devices of the system 100 (e.g., supplier subsystems 104 and client subsystems 120) via the network 128. The communication interface 208 therefore includes any necessary components (e.g., network interface controllers (NICs), radio units, and the like) to communicate via the network 128. The specific components of the communication interface 208 are selected based on the nature of the network 128. The aggregator 132 can also include input and output devices connected to the processor 200, such as keyboards, mice, displays, and the like (not shown).

The components of the aggregator 132 mentioned above can be deployed in a single enclosure, or in a distributed format. In some examples, therefore, the aggregator 132 includes a plurality of processors, either sharing the memory 204 and communication interface 208, or each having distinct associated memories and communication interfaces.

The memory 204 can store a repository 212 containing the data records mentioned above, as well as data associating those data records and used to reconstruct mixed itineraries. The memory 204 also stores a plurality of computer-readable programming instructions, executable by the processor 200, in the form of various applications, including a record processing application 216. As will be understood by those skilled in the art, the processor 200 executes the instructions of the application 216 (and any other suitable applications) in order to perform various actions defined by the instructions contained therein. In the description below, the processor 200, and more generally the aggregator 132, are said to be configured to perform those actions. It will be understood that they are so configured via the execution (by the processor 200) of the instructions of the applications stored in memory 204. Execution of the application 216, as will be discussed below, configures the aggregator 132 to generate and modify data associating data records from the suppliers 104 to present mixed itineraries to the client subsystem 120, in particular to perform operations involving changes to portions of mixed itineraries.

In other embodiments, the application 216 can be implemented using preprogrammed hardware or firmware elements (e.g., application specific integrated circuits (ASICs), electrically erasable programmable read-only memories (EEPROMs), etc.), or other related components.

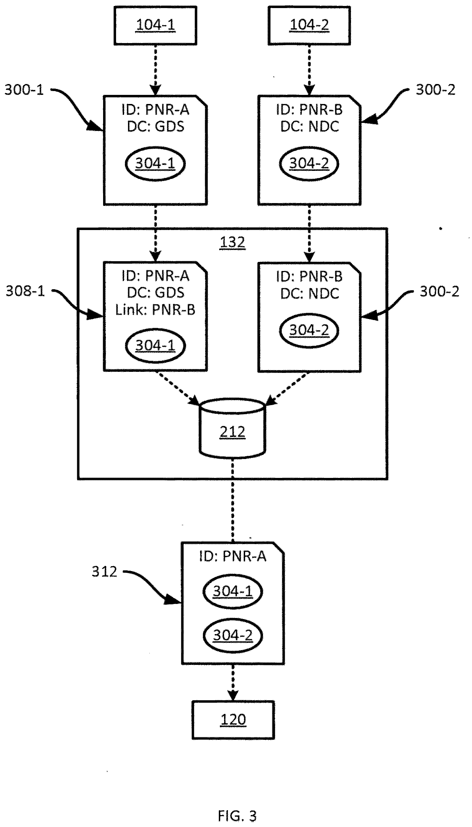

FIG. 3 illustrates, according to some embodiments, the storage of data associating data records from the suppliers 104, and used to reconstruct a mixed itinerary for rendering at the client subsystem 120. FIG. 3 illustrates a first data record 300-1, and a second data record 300-2, e.g., received at the aggregator 132 from the supplier. The data records 300 are of different types, e.g., corresponding to distinct distribution channels. Each data record 300 has an identifier, shown as "PNR-A" for the record 300-1 and "PNR-B" for the record 300-2 in this example. As will be apparent to those skilled in the art, a wide variety of record identifiers can be used for data records, and record identifiers are generally more complex than the examples shown in FIG. 3.

Each data record 300 also includes an indicator of the distribution channel (DC) via which it originated, although such indicators need not appear explicitly in the data records 300 in other examples. The data records 300 also include respective content 304-1 and 304-2, defining travel products or services (or any of a variety of other information), such as flight times, pricing, traveler information such as passenger names, and the like. The records 300 may be received at the aggregator 132 via a sequence of previous interactions between the client subsystem 120 and the suppliers 104, intermediated by the aggregator 132.

When the aggregator 132 is instructed to associate the records 300 for presentation to the client subsystem 120 in a single itinerary (e.g., via one or more of the sequence of interactions mentioned above), the aggregator 132 is configured to insert a link in the record 300-1, containing the identifier of the record 300-2, generating a master record 308-1 for the itinerary. In other words, the records 300-1 and 300-2 need not actually be combined into a single record for storage in the repository 212. Instead, the aggregator combines, or "mixes", the records 308-1 and 300-2 dynamically upon request by the client subsystem 120. For example, the aggregator 132 can return a mixed record 312 to the client subsystem 120, containing only the identifier "PNR-A" of the record 300-1 (and therefore of the record 308-1), as well as the content 304-1 and 304-2. The client subsystem 120 can therefore view and manipulate the content 304-1 and 304-2, even if configured to handle only records of the GDS type. The mixed record 312 need not be stored in the repository 212, but can instead be reconstructed from the records 308-1 and 300-2 when the aggregator 132 receives a request for the record identifier "PNR-A" from the client subsystem 120.

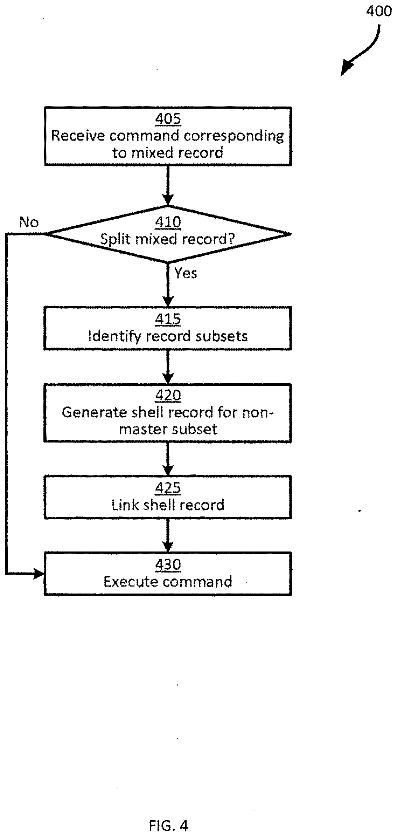

Turning now to FIG. 4, certain aspects of the operation of the system 100 will be described in greater detail. Specifically, FIG. 4 illustrates a method 400 of differential processing of data record components. The method 400 will be described in conjunction with its performance within the system 100. in particular, the blocks of the method 400 are performed by aggregator 132 via the execution of the application 216 by the processor 200.

At block 405, the aggregator 132 is configured to receive a command corresponding to a mixed record. The command can include, in other words, an identifier of a record 308 that contains a link to another record 300. The command can be received from the client subsystem 120 in some examples, and can take a variety of forms. For example, the aggregator 132 can receive a command from the client subsystem 120 to perform a particular modification to the record (e.g., to modify a passenger name). In other examples, the command can be received at the aggregator 132 from a supplier 104. For example, the supplier 104-2 may send a command to the aggregator indicating that the content 304-2 has been divided between two distinct records 300 (both of the type NDC, in this example) due to operational changes within the airline corresponding to the supplier 104-2. As will be apparent to those skilled in the art, the requesting entity (e.g., the client subsystem 120 or a supplier 104) need not be aware that the record identifier in the request corresponds to a mixed record.

At block 410, the aggregator 132 is configured to determine whether executing the command received at block 405 involves splitting the mixed record. The aggregator 132 can, for example, maintain a list of commands whose execution requires splitting mixed records. The determination at block 410 can therefore involve determining whether the command received at block 405 appears on that list.

When the determination at block 410 is affirmative, the aggregator 132 performs a set of functions, described below in connection with blocks 415 to 425, to enable the manipulation of a portion of a mixed record, while maintaining the ability for the client subsystem 120 to retrieve the entire mixed record. When the determination at block 410 is negative, the aggregator 132 can bypass blocks 415 to 425, and execute the command at block 430. For example, if the command received at block 405 is a command to provide payment data for an itinerary to the relevant supplier(s) 104, and the payment command does not appear on the above-mentioned list of commands requiring record splits, the aggregator 132 can proceed directly to block 430 and process the payment data for provision to one or more of the suppliers 104.

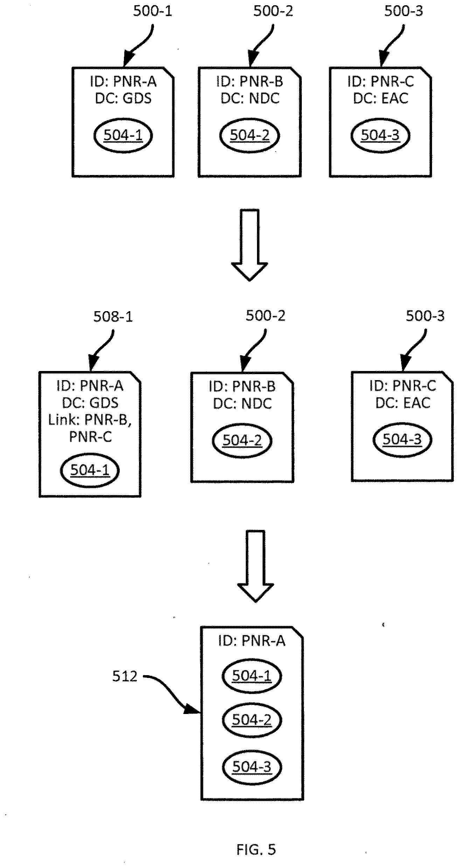

At block 415, the aggregator 132 is configured to identify subsets of the records that are components of the mixed record corresponding to the record identifier in the request received at block 405. Identifying record subsets at block 415 includes following the link(s) in the record having the identifier from block 405. For example, turning to FIG. 5, an example set of records 500-1, 500-2, and 500-3 are shown, each having respective content 504-1, 504-2, and 504-3, and the identifiers PNR-A, PNR-B, and PNR-C. The records 500 were previously associated for presentation to the client subsystem 120 as a mixed record, e.g., via the addition of links to the records 500-2 and 500-3 within a record 508-1 generated from the record 500-1. The records 500 can therefore be presented to the client subsystem 120 as a mixed record 512, as shown in FIG. 5.

In response to receiving a command including the identifier "PNR-A", and determining that the command requires splitting the mixed record 512 (that is, enabling the client subsystem 120 to specifically manipulate a portion of the record 512 independently of the rest of the record 512), the aggregator 132 is configured to identify two subsets of the records 508-1, 500-2, and 500-3. The first subset includes one or more records to be manipulated via the command from block 405. For example, if the command is a command to change a passenger name in the content 504-2, the first subset includes the record 500-2. The second subset includes any records not in the first subset (that is, the records not directly manipulated by execution of the command from block 405).

In the example of FIG. 5, with a name-change command corresponding to the content 504-2, the first subset therefore includes the record 500-2, and the second subset includes the records 508-1 and 500-3. As will be apparent from the discussion above, one of the subsets necessarily includes the master record 508-1, while the other subset does not include the master record 508-1.

Referring again to FIG. 4, at block 420 the aggregator 132 is configured to generate a shell record for addition to the subset that does not contain the master record 508-1. Because the master record 508-1 bears the identifier (PNR-A, in this example) used by the client subsystem 120 to retrieve the mixed record 512, the client subsystem 120 may not initially have the ability to retrieve the records of the non-master subset independently of the master record 508-1. The client subsystem 120 may therefore be unable to interact with the records in the subset not containing the master record 508-1. The generation of a shell record serves to create a second master identifier that will be provided to the client subsystem 120. At block 425, the aggregator 132 is configured to link the shell record generated at block 420 with at least a portion of the other records that contribute to the mixed record 512.

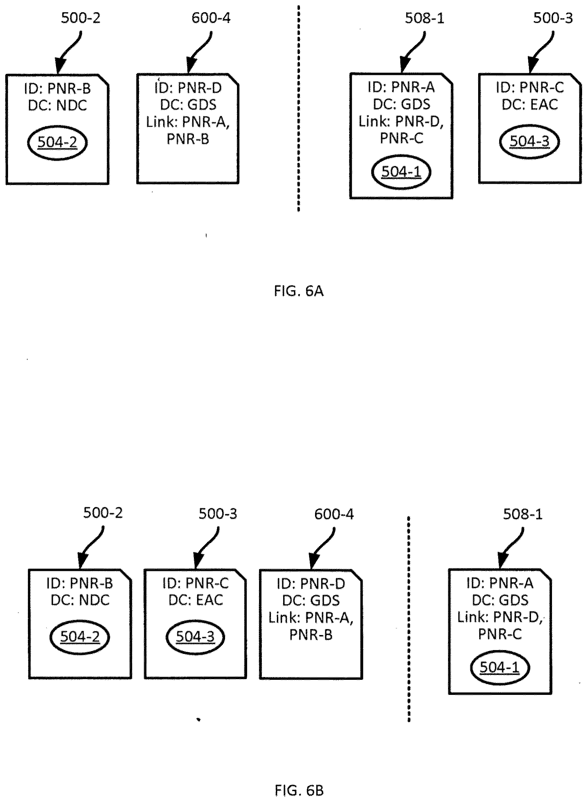

Turning to FIG. 6A, an example performance of blocks 420 and 425 is illustrated. The aggregator 132 can, for example, generate a shell record 600-4, referred to as a shell because the record 600-4 has no content. That is, the record 600-4 does not define any products or services, but instead contains only metadata. The shell record 600-4 contains a new record identifier "PNR-D", generated at the aggregator 132 and generally not known to the suppliers 104. The aggregator 132 also inserts into the shell record 600-4, at block 425, a link to the master record 508-1, e.g., in the form of the record identifier "PNR-A". In some examples, the aggregator 132 can also copy the link metadata from the record 508-1 into the record 600-4 (e.g., links to the record identifiers PNR-B and PNR-C). The record 508-1 can also be updated, as shown in FIG. 6, to remove the direct link to the record 500-2.

As will now be apparent, if the request from block 405 involved splitting the GDS content from the mixed record 512, then as shown in FIG. 6B, the subsets identified at block 420 include the records 500-2 and 500-3 in one subset, and the record 508-1 in the other subset. As a result, the shell record 600-4 would be added to the subset containing the records 500-2 and 500-3.

Returning to FIG. 4, at block 430 the aggregator 132 is configured to execute the command from block 405. For example, if the command at block 405 was a command to change a passenger name associated with the record 500-2, the aggregator 132 can be configured to transmit one or more messages to the supplier 104-1 to effect the change of name for the passenger. In some instances, the command from block 405 is a command to split the mixed record 512, rather than to make a modification to the content 504 of the records 500 or 508. In that case, executing the command at block 430 can include returning the identifier of the shell record 600-4 to the client subsystem 120, e.g., enabling the client subsystem 120 to make subsequent requests specific to the subset of records 500-2 and 600-4. Execution of the command at block 430 can also include sending a notification, warning, or the like, to the client subsystem 120, for presentation via an output device of the client subsystem 120 such as a display, indicating that the mixed record 512 has been split.

The generation of a shell record such as the record 600-4 in the example above permits updates to a portion of a set of related records that appear to the client subsystem 120 as a mixed record, without losing the association between that portion of the records, and the remainder of the records contributing to the mixed record. The provision of a new identifier for a record of the same type as the master record 508-1 (e.g., GDS in this example) provisions the client subsystem 120 with distinct master record identifiers, which define distinct mixed records and permit more flexible manipulation of the content 504.

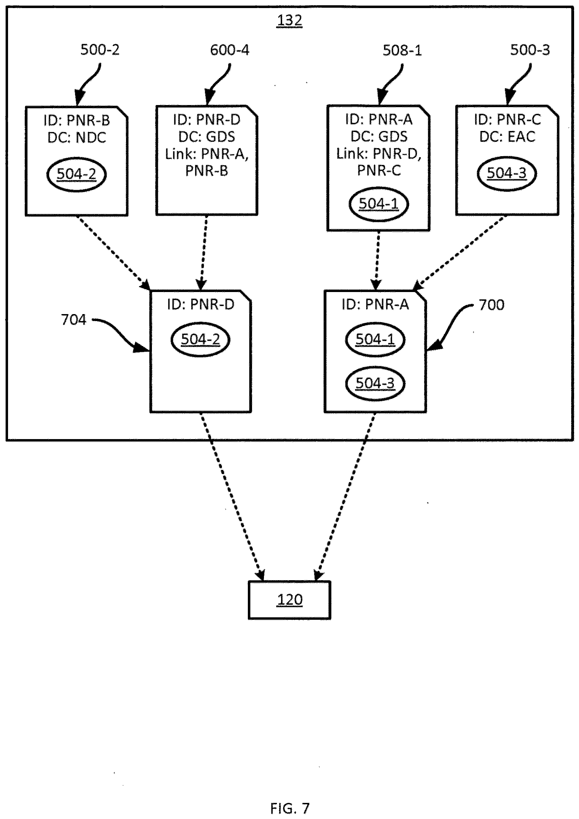

An example retrieval process for the records containing the content 504-1, 504-2, and 504-3 by the client subsystem 120, after a performance of the method 400, is illustrated in FIG. 7. For example, the client subsystem 120 can send a request to the aggregator including the identifier "PNR-A". The aggregator 132 retrieves the record 508-1, and as a result of the links stored therein, also retrieves the record 500-3 and the shell record 600-4. The aggregator 132 is configured, for linked record identifiers of different content types (e.g., the identifier PNR-C), to combine the linked record(s) with the master record 508-1, e.g., and form a mixed record 700. For linked records of the same type, however (e.g., the shell record 600-4), the aggregator 132 is configured to retrieve such records and generate a distinct mixed record 704 according to any links contained in the shell record 600-4. The retrieval of either the record identifier PNR-D or the record identifier PNR-A, in other words, provides both mixed records 700 and 704 to the client subsystem 120, and the client subsystem 120 can manipulate the mixed records 700 and 704 independently of one another. As will be apparent from the discussion above, the mixed records 700 and 704 need not be stored persistently at the aggregator 132, but can instead be reconstructed dynamically from the records 500, 508, and 600, in response to requests from the client subsystem 120.

The scope of the claims should not be limited by the embodiments set forth in the above examples, but should be given the broadest interpretation consistent with the description as a whole.

## Claims

1. A method, comprising:
storing a set of records including:
(i) a first record having a first identifier, and
(ii) a second record having a second identifier and a link to the first record, the second identifier configured, via the link to the first record, to identify a first mixed record generated from the first and second records;
receiving a request containing the second identifier;
generating a shell record including a third identifier and a further link to the first record, the third identifier configured, via the further link to the first record, to identify a second mixed record generated from the shell record and the first record; and
storing the shell record.

2. The method of claim 1, wherein:
the first record includes first content;
the second record includes second content; and
the shell record includes no content.

3. The method of claim 1 or 2, further comprising:
prior to generating the shell record, determining that the request contains a command to split the first mixed record.

4. The method of claim 3, wherein determining that the request includes a command to split the first mixed record includes:
comparing the request to a predetermined list of commands.

5. The method of claim 4, further comprising:
in response to generating the shell record, executing the command.

6. The method according to one of the claims 1 to 5, wherein the first record has a first format, and the second record and the shell record each have a second format distinct from the first format.

7. The method according to one of the claims 1 to 6, wherein the request is received from a client subsystem; the method further comprising:
sending a notification to the client subsystem indicating that the first mixed record has been split.

8. A computing device, comprising:
a memory storing a set of records including:
(i) a first record having a first identifier, and
(ii) a second record having a second identifier and a link to the first record, the second identifier configured, via the link to the first record, to identify a first mixed record generated from the first and second records; and
a processor configured to:
receive a request containing the second identifier;
generate a shell record including a third identifier and a further link to the first record, the third identifier configured, via the further link to the first record, to identify a second mixed record generated from the shell record and the first record; and
store the shell record in the memory.

9. The computing device of claim 8, wherein:
the first record includes first content;
the second record includes second content; and
the shell record includes no content.

10. The computing device of claim 8 or 9, wherein the processor is further configured to:
prior to generating the shell record, determine that the request contains a command to split the first mixed record.

11. The computing device of claim 10, wherein the processor is configured to determine that the request includes a command to split the first mixed record by:
comparing the request to a predetermined list of commands.

12. The computing device of claim 11, wherein the processor is further configured to:
in response to generating the shell record, execute the command.

13. The computing device according to one of the claims 8 to 12, wherein the first record has a first format, and the second record and the shell record each have a second format distinct from the first format.

14. The computing device according to one of the claims 8 to 13, wherein the request is received from a client subsystem; and wherein the processor is further configured to:
send a notification to the client subsystem indicating that the first mixed record has been split.

15. A non-transitory computer-readable medium storing instructions executable by a processor of a computing device to perform the method of any one of claims 1-7.
